# EUROPEAN PATENT SPECIFICATION

(11) **EP 3 237 525 B1**
(45) Date of publication and mention of the grant of the patent: **17.04.2019**
(21) Application number: 15874097.7
(22) Date of filing: 08.12.2015
(51) Int. Cl.: C08K 3/04, C08K 3/36, C08L 21/00, B60C 23/04

(54) **RUBBER COMPOSITIONS FOR RADIO DEVICES IN TIRES**
KAUTSCHUKZUSAMMENSETZUNGEN FÜR FUNKVORRICHTUNGEN IN REIFEN
COMPOSITIONS DE CAOUTCHOUC POUR DISPOSITIFS RADIO DANS DES PNEUMATIQUES

(30) Priority: 22.12.2014 US 201462095138 P
(43) Date of publication of application: 01.11.2017
(73) Proprietor: Bridgestone Americas Tire Operations, LLC, Nashville, TN 37201 (US)
(72) Inventor: BALNIS, Craig, R., Akron, OH 44303 (US); RANDALL, Amy, M., Akron, OH 44313 (US); WILSON, Paul, B., Tallmadge, OH 44278 (US)
(74) Representative: Banzer, Hans-Jörg
(86) International application number: PCT/US2015/064495
(87) International publication number: WO 2016/105929

(56) References cited:
- WO-A1-2016/097257
- JP-A- H09 118 780
- US-A- 5 426 147
- US-A1- 2009 000 718
- US-A1- 2009 015 415
- US-A1- 2013 292 023
- US-A1- 2014 333 492

## Description

### FIELD

The present application is directed to an electronic communication module suitable for incorporating into a tire, where the electronic communication module comprises a radio device having at least a portion of its outer surface surrounded by a rubber composition of specified composition.

### BACKGROUND

Electronic devices integrated in a tire can provide functions such as identification and tracking during manufacture, distribution, and use of a tire. Such devices can also function to monitor physical parameters such as pressure and temperature during use of the tire. Tire identification and monitoring devices may be passive or active depending on design and desired functions.

One type of known tire identification (or tracking) device stores a unique identification number that may be read by a remote device that obtains the information from the tire identification device. Tire manufacturers may wish to incorporate a tire identification device into each tire manufactured so that the tire may be tracked during the manufacturing process and during subsequent use on vehicles.

Tire monitoring devices may be configured to read operating conditions of the tire and transmit the information from the tire to an outside reader. Such devices may be useful to trigger alarms when certain operating conditions are met (*e.g.,* the pressure of the tire is too low). These monitoring devices may also be configured to store the information for later retrieval.

Given the wide variety of available identification and monitoring devices, a wide variety of mounting configurations also exist for these devices. Exemplary known mounting configurations include incorporating the monitoring device into a tire sidewall, incorporating the monitoring device into the bead filler, attaching the device with a patch or adhesive to the tire sidewall, attaching the device directly to the innerliner with a patch or an adhesive, connecting the device to the rim that supports the tire, and mounting the device to the valve stem of the wheel.

### SUMMARY

The embodiments described herein generally relate to an electronic communication module suitable for incorporating into a tire or tire retread, where the electronic communication module comprises a radio device having at least a portion of its outer surface surrounded by a rubber composition of specified composition. Certain embodiments also relate to the tires or tire retreads incorporating the electronic communication module. In addition, certain embodiments relate to methods for improving the readability of a radio device incorporated into a tire or tire retread.

In a first embodiment, the present disclosure is directed to an electronic communication module for a tire or tire retread comprising a radio device having at least a portion of its outer surface surrounded by a rubber composition. The rubber composition comprises 100 phr of at least one diene-based elastomer and at least about 35 phr of carbon black, wherein the carbon black has a nitrogen surface area of no more than 30 meter²/gram (m²/g) and a DBP absorption of no more than 60 centimeter³/100 gram (cm³/100 g). The rubber composition has a dielectric constant at 915 Megahertz (MHz) of less than 7.

In a second embodiment, the present disclosure is directed to a tire or tire retread comprising the electronic communication module of the first embodiment.

In a third embodiment, the present disclosure is directed to a method of improving the readability of a radio device upon incorporation into a tire or tire retread, the method comprising surrounding at least a portion of the outer surface of the radio device by a rubber composition, thereby forming an electronic communication module. The rubber composition according to this embodiment comprises 100 phr of at least one diene-based elastomer and at least about 35 phr of carbon black, wherein the carbon black has a nitrogen surface area of no more than 30 m²/g and a DBP absorption of no more than 60 cm³/100 g. The rubber composition has a dielectric constant at 915 MHz of less than 7.

### DETAILED DESCRIPTION

### Definitions

The terminology as set forth herein is for description of the embodiments only and should not be construed as limiting the invention as a whole.

As used herein, "DBP" refers to dibutyl phthalate.

As used herein, "DBP absorption" refers to the dibutyl phthalate absorption test used to determine the structure of carbon black. The DBP absorption can be determined by various standard methods, including the method mentioned herein.

As used herein the term "natural rubber" means naturally occurring rubber such as can be harvested from sources such as *Hevea* rubber trees and non-*Hevea* sources *(e.g.,* guayule shrubs and dandelions such as TKS). In other words, the term "natural rubber" should be construed so as to exclude synthetic polyisoprene.

As used herein, "nitrogen surface area" refers to the nitrogen absorption specific surface area (N₂SA) of particulate material, including but not limited to the carbon black and "non-reinforcing fillers" particulate material discussed herein. The nitrogen surface area can be determined by various standard methods including those mentioned below.

As used herein, the term "phr" means parts per one hundred parts rubber. The 100 parts rubber refers to 100 parts of the at least one diene based elastomer.

As used herein the term "polyisoprene" means synthetic polyisoprene. In other words, the term is used to indicate a polymer that is manufactured from isoprene monomers, and should not be construed as including naturally occurring rubber (*e.g., Hevea* natural rubber, guayule-sourced natural rubber, or dandelion-sourced natural rubber). However, the term polyisoprene should be construed as including polyisoprenes manufactured from natural sources of isoprene monomer.

As used herein the terms "relative permittivity" and "dielectric constant" of a material are intended to have the same meaning and are used interchangeably to refer to the ratio of the dielectric permittivity of a material to the permittivity of a vacuum. Unless otherwise indicated, the dielectric constant values disclosed herein refer to those of a cured form of the rubber composition.

### Electronic Communication Module

The present disclosure generally relates to an electronic communication module suitable for incorporating into a tire or tire retread, where the electronic communication module comprises a radio device having at least a portion of its outer surface surrounded by a rubber composition of specified composition.

As discussed above, a first embodiment is directed to an electronic communication module for a tire or tire retread comprising a radio device having at least a portion of its outer surface surrounded by a rubber composition. The rubber composition comprises 100 phr of at least one diene-based elastomer and at least about 35 phr of carbon black, wherein the carbon black has a nitrogen surface area of no more than 30 m²/g and a DBP absorption of no more than 60 cm³/100 g. The rubber composition has a dielectric constant at 915 MHz of less than 7.

As discussed above, in a second embodiment, the present disclosure is directed to a tire or tire retread comprising the electronic communication module of the first embodiment.

Furthermore, as discussed above, in a third embodiment, the present disclosure is directed to a method of improving the readability of a radio device upon incorporation into a tire or tire retread, the method comprising surrounding at least a portion of the outer surface of the radio device by a rubber composition, thereby forming an electronic communication module. The rubber composition according to this embodiment comprises 100 phr of at least one diene-based elastomer and at least about 35 phr of carbon black, wherein the carbon black has a nitrogen surface area of no more than 30 m²/g and a DBP absorption of no more than 60 cm³/100 g. The rubber composition has a dielectric constant at 915 MHz of less than 7.

As used herein, "improving the readability of the radio device" refers to one or more of the following: (i) increasing the readability distance between the radio device in the electronic communication module and an external, remote communication device without necessarily increasing the power or energy applied to either device; (ii) reducing the interference or noise affecting communication between the radio device and an external, remote communication device; and (iii) avoiding or minimizing any tuning variations needed for the radio device to accurately and completely communicate with an external, remote communication device. Thus, in certain embodiments, improving the readability of the radio device comprises increasing the readability distance between the radio device in the electronic communication module and an external, remote communication device; in certain such embodiments, the improvement being measured is compared to the use of a rubber composition that substitutes an equivalent amount of N5 series, N4 series, or N3 series carbon black for the carbon black of the first and second embodiments, which has a nitrogen surface area of greater than 30 m²/g and a DBP absorption of greater than 60 cm³/100 g. In certain embodiments, the improvement in readability is compared to the use of a rubber composition that substitutes an equivalent amount of N330 carbon black for the carbon black having a nitrogen surface area of no more than 30 m²/g and a DBP absorption of no more than 60 cm³/100 g. In certain embodiments, the readability distance is improved by at least about 5%, including at least 5%, at least about 10%, at least 10%, at least about 15%, at least 15%, at least about 20%, at least 20%, at least about 25%, at least 25%, at least about 30%, at least 30%, at least about 35%, at least 35%, at least about 40%, at least 40%, at least about 45%, at least 45%, at least about 50%, at least 50%, at least about 100%, at least 100%, and associated ranges (e.g., about 25% to about 200%, 25% to 200%, etc.). In certain embodiments, the readability distance is improved by about 5% or more, including 5% or more, about 10% or more, 10% or more, about 15% or more, 15% or more, about 20% or more, 20% or more, about 25% or more, 25% or more, about 30% or more, 30% or more, about 35% or more, 35% or more, about 40% or more, 40% or more, about 45% or more, 45% or more, about 50% or more, 50% or more, about 100% or more, 100% or more, and associated ranges (*e.g.,* about 25 to about 200%, 25% to 200%, etc.). The foregoing percentages of improvement in readability are based upon an increase in readability distance; for example, an improvement of 100% in readability distance means that the readability distance is doubled. According to certain preferred embodiments of the second embodiment, the improvement in readability distance is measured as compared to an equivalent radio device similarly incorporated into a tire (of the same size and at the same position) and similarly surrounded by a rubber composition (but which differs in composition by replacing non-reinforcing carbon black with reinforcing carbon black and removing any silica filler) and represents the improvement in maximum readability distance with each composition achieved by varying the antenna length (since it is understood that the antenna length which achieves the maximum readability distance for an inventive composition may differ somewhat from the antenna length which achieves the maximum readability distance for the comparative composition. An exemplary method for calculating the amount of improvement in readability distance is provided in Examples 5 and 6 below (and Example 5 should be understood as representing a suitable rubber composition for comparative purposes). The percentage improvements disclosed herein are intended to refer to an improvement in readability distance when a radio device is entirely coated with a rubber composition as disclosed herein and incorporated into a tire as specified in the Examples (including use of the same size tire), although it is specifically intended that the radio devices can also be incorporated into different portions or positions of a tire and into different size tires than those disclosed in the Examples.

Certain mounting configurations for radio identification or radio monitoring devices incorporated within a tire or tire retread may prove problematic due to properties of the rubber or other materials (*e.g.,* metal) of the tire or tire retread proximate to or adjacent to the installation location of the radio device. For example, the rubber (or other materials) of a tire or tire retread having a high permittivity may dissipate or shorten the readability distance of the radio device *via* the transmission or absorption of the electromagnetic waves sent to or coming from the radio device. In addition, such rubber (or other materials) of a tire or tire retread may transmit or generate noise or interference that negatively affects the readability of the radio device. The electronic communication modules of the present disclosure minimize such issues by surrounding at least a portion of the outer surface of the radio device with a rubber composition having a low relative permittivity, *i.e.,* a low dielectric constant. The low relative permittivity (*i.e.,* a low dielectric constant) of rubber compositions disclosed herein functions to improve the readability of the radio device (1) by minimizing loss *via* the transmission or absorption of the electromagnetic waves into the adjacent or proximate rubber or other materials found in the tire or tire retread, (2) by minimizing noise or interference generated or transmitted by the adjacent or proximate rubber or other materials found in the tire or tire retread, or both (1) and (2). Consequently, by minimizing (1) and/or (2), the amount of tuning necessary to accurately and completely communicate with the radio device may also be minimized or avoided. The electronic communication module disclosed herein functions in this manner by having at least a portion of its outer surface surrounded by a rubber composition having a dielectric constant less than 7 at 915 MHz. It should be understood that the dielectric constants or permittivity of the rubber compositions, as discussed herein, are measured on the rubber compositions after curing or vulcanization, unless stated to the contrary. Preferably, the measurement of the dielectric constant or permittivity of the rubber composition is made upon a sample of rubber composition prior to using it to surround at least a portion of the outer surface of the radio device. However, if a measurement is being made upon an electronic communication device that has already had at least a portion of the outer surface of its radio device surrounded by the rubber composition, the measurement can be made either upon a sample of the same rubber composition that has not been used with the radio device or upon a sample of the rubber composition after it is removed from the outer surface of the radio device. In accordance with certain of the first, second, and third embodiments disclosed herein, the rubber composition (when cured), has a dielectric constant at 915 MHz of less than 7, including 2.5 to 7, 2.5 to less than 7, preferably 2.5 to 5.

As discussed above, in accordance with the first, second, and third embodiments disclosed herein, the radio device of the electronic communication module has at least a portion of its outer surface surrounded by the rubber composition. In certain embodiments of the first, second, and third embodiments disclosed herein, the radio device of the electronic communication module has an antenna and a majority of the outer surface of the antenna is surrounded by the rubber composition; in yet other embodiments of the first, second, and third embodiments disclosed herein the outer surface of the antenna of the electronic communication devices is entirely surrounded by the rubber composition. In certain embodiments of the first, second, and third embodiments disclosed herein, the portion of the outer surface of the radio device of the electronic communication module that is surrounded by the rubber composition comprises at least 10%, at least 20%, at least 30%, at least 40%, at least 50%, at least 60%, at least 70%, at least 80%, at least 90%, at least 95% and 100%; in such embodiments the foregoing includes the ranges 10-50%, 10-60%, 10-70%, 10-80%, 10-90%, 10-95%, 10-100%, 20-50%, 20-60%, 20-70%, 20-80%, 20-90%, 20-95%, 20-100%, 30-50%, 30-60%, 30-70%, 30-80%, 30-90%, 30-95%, 30-100%, 40-50%, 40-60%, 40-70%, 40-80%, 40-90%, 40-95%, 40-100%, 50-60%, 50-70%, 50-80%, 50-90%, 50-95%, 50-100%, 60-70%, 60-80%, 60-90%, 60-95%, 60-100%, 70-80%, 70-90%, 70-95%, 70-100%, 80-90%, 80-95%, 80-100%, 90-95%, 90-100%, and 95-100%. In certain embodiments of the first, second, and third embodiments disclosed herein, the radio device of the electronic communication module has a majority of its outer surface surrounded by the rubber composition. The phrase "a majority" as used herein refers to greater than 50% and should be understood to encompass up to 100%. Thus, in accordance with certain of the first-third embodiments, 51-100%, 51-99%, 51-95%, 51-90%, 51-80%, 51-70%, 51-60%, 60-100%, 60-99%, 60-90%, 60-80%, 60-70%, 70-100%, 70-99%, 70-95%, 70-90%, 70-80%, 80-100%, 80-99%, 80-95%, 80-90%, 90-100%, 90-99%, or 90-95% of the outer surface of the radio device is surrounded by the rubber composition of the electronic communication module. In certain embodiments, the rubber composition of the electronic communication module is in direct contact with the outer surface of the radio device. In other embodiments, one or more coatings, films, or other materials may form an intermediate layer disposed between the outer surface of the radio device and the rubber composition. Such intermediate layers may be used, for example, as a sizing or primer to improve adhesion of the outer surface of the radio device and the rubber composition. The selection and application of such an intermediate layer could be determined by one of ordinary skill in the art.

The thickness of the rubber composition that surrounds at least a portion of the outer surface of the radio device may vary. In certain embodiments of the first-third embodiments disclosed herein, the thickness of the rubber composition is relatively uniform around the outer surface of the radio device. In other embodiments of the first-third embodiments disclosed herein, the thickness of the rubber composition varies around the outer surface of the radio device. In certain embodiments of the first-third embodiments disclosed herein, the thickness of the rubber composition that surrounds at least a portion of the outer surface of the radio device is about 0.5 mm to about 3 mm (including 0.5 mm to 3 mm), including about 1 mm to about 3 mm (including 1 mm to 3 mm).

The rubber composition that surrounds at least a portion of the outer surface of the radio device may be placed upon the radio device using various methods. In certain embodiments, the rubber composition is placed upon the radio device as rubber sheets or layers. More specifically, in such embodiments, the rubber composition is calendered or otherwise formed into an uncured sheet of rubber having a uniform thickness (such as of about 0.5 mm or 0.5 mm). The radio device is placed onto the upper surface of the rubber sheet with a portion of the lower surface of the radio device contacting the rubber sheet. A second rubber sheet (generally having the same thickness as the first sheet) is placed over the upper surface of the radio device so that at least a portion of the outer surface of the radio device is covered by the two rubber layers. The two rubber layers are then pressed together to promote adhesion of first rubber layer to the second rubber layer with the radio device substantially captured between. Adhesion of the two rubber layers may be assisted by various means such as by using a dual roller assembly to press the components together and expel any trapped air, by stitching the layers together (such as by using a stitching roller), by manual finger pressure, by use of an inflatable bladder, by use of a compression molding fixture, or by any other means suitable for assisting in the adhesion of the two rubber layers. As discussed elsewhere herein, once the radio device has had at least a portion of its outer surface surrounded by the rubber composition, it is referred to as an electronic communication module.

### Radio Device

In accordance with the first, second, and third embodiments disclosed herein, the electronic communication module includes a radio device. The radio device includes any suitable radio device known in the art capable of storing information (*i.e.,* data), communicating information, or both storing and communicating information with another device. In certain embodiments, the radio device disclosed herein is capable of conveying information. The conveying of information by the radio device comprises the receipt of a radio signal combined with transponding (by reflecting) a portion of the received radio signal back to a reader with a signal modulated by varying the radio device's antenna impedance. Generally, such a radio device which conveys information by transponding in response to being activated by energy (*e.g.,* electromagnetic waves) sent by an external, remote transponder (*e.g.,* an interrogator-type or reader-type of transponder) is considered a passive device. In certain embodiments, the radio device disclosed herein is capable of actively transmitting information; such a radio device is an active device because it can actively transmit information. Certain such active devices transmit without the need for any activation by an external, remote transponder (*e.g.,* at periodic intervals) and other such active devices actively transmit information in response to an appropriate activation received from an external, remote transponder. In certain embodiments, the radio device conveys or transmits information *via* electromagnetic radio waves having a frequency in the range that is allowable according to local regulations. For example, in the United States, this frequency generally ranges from about 900 MHz to about 930 MHz (including 900 MHz to 930 MHz) (the current approved range being 902-928 MHz at a power level not to exceed 36 dbm) and in portions of Europe and Asia may be at a somewhat lower frequency of about 860 MHz (including 860 Mz) (the current approved range in portions of Europe is 865.6-867.6 MHz at a power level not to exceed 33 dBm). Generally, the radio devices discussed herein will be designed to convey or transmit information at a frequency ranging from about 860 MHz to about 960 MHz (including 860 MHz to 960 MHz). However, in certain embodiments, the radio devices discussed herein may be designed to convey or transmit information at another frequency range. Examples of suitable radio devices for use with the electronic communication modules disclosed herein include transponders (*e.g.,* devices that both receive information and transpond at least a portion of it), transmitters, receivers, and reflectors. Generally, the radio device is configured to convey or transmit information to/from an external, remote communication device, which itself may be a transponder, transmitter, receiver, or reflector depending on the functionality of the radio device of the electronic communication module of the first-third embodiments that it is communicating with (*e.g.,* if the remote communication device is a transmitter, the electronic communication module's radio device is a transponder, receiver, or reflector capable of interacting with the electromagnetic waves sent from the transmitter). As used herein, the term "radio device" is inclusive of any and all of the components necessary to operate as a transponder, transmitter, receiver, or reflector, *e.g.,* a circuit board, memory, antenna, *etc.*

The types of radio devices useful in the embodiments disclosed herein include radio identification or tracking devices which may contain unique identifier information associated with the tire such that may be used in one or more of manufacturing, distribution, sale, and use activities associated with the tire. A specific example of a use activity includes information added during the use of a tire, such as could be added during retreading. A specific example of such identification or tracking device is a radio frequency identification device, more commonly referred to as an "RFID" device. In accordance with certain of the first-third embodiments, the radio device is an RFID device. Other examples of the radio devices include radio monitoring devices capable of measuring and/or storing temperature, pressure or other physical parameters associated with an operating tire. Other examples of suitable radio devices include those with both identification and monitoring functionality.

### Rubber Composition

In accordance with the first, second, and third embodiments disclosed herein, the radio device of electronic communication module has at least a portion of its outer surface surrounded by a rubber composition. The rubber composition according to the first-third embodiments comprises 100 phr of at least one diene-based elastomer and at least about 35 phr (including at least 35 phr) of carbon black, wherein the carbon black has a nitrogen surface area of no more than 30 m²/g and a DBP absorption of no more than 60 cm³/100 g. The rubber compositions according to the first-third embodiments disclosed herein have a dielectric constant of less than 7 at 915 MHz, including 2.5 to 7, 2.5 to less than 7, preferably 2.5 to 5, in the cured form of the rubber composition.

### Carbon Black

As discussed above, the rubber composition according to the first-third embodiments disclosed herein comprises at least about 35 phr of carbon black having a nitrogen surface area of no more than 30 m²/g and a DBP absorption of no more than 60 cm³/100 g, including at least 35 phr, at least about 40 phr, at least 40 phr, at least about 50 phr, at least 50 phr, at least about 60 phr, at least 60 phr, at least about 70 phr, at least 70 phr, at least about 80 phr, at least 80 phr, at least about 90 phr, at least 90 phr, at least about 95 phr, at least 95 phr and in certain embodiments no more than about 100 phr or no more than 100 phr of such carbon black; in such embodiments the foregoing includes the ranges from about 35 phr to about 100 phr carbon black, including 35 phr to 100 phr, including from about 35 phr to about 95 phr, including 35 phr to 95 phr, including from about 35 phr to about 85 phr, including 35 phr to 85 phr, including from about 35 phr to about 75 phr, including 35 phr to 75 phr, including from about 45 phr to about 100 phr carbon black, including 45 phr to 100 phr, including from about 45 phr to about 95 phr, including 45 phr to 95 phr, including from about 45 phr to about 85 phr, including 45 phr to 85 phr, including from about 45 phr to about 75 phr, including 45 phr to 75 phr, including from about 50 phr to about 100 phr carbon black, including 50 phr to 100 phr, including from about 50 phr to about 95 phr, including 50 phr to 95 phr, including from about 50 phr to about 85 phr, including 50 phr to 85 phr, and including from about 50 phr to about 75 phr and 50 phr to 75 phr.

Carbon blacks having a nitrogen surface area of greater than 30 m²/g and a DBP absorption of greater than 60 cm³/100 g can be considered to be reinforcing fillers, and may provide, or at least contribute to, a high relative permittivity in the cured rubber composition (*i.e.,* a cured rubber composition having a dielectric constant greater than or equal to 7), thereby deteriorating the readability of the radio device surrounded by the rubber composition in the electronic communication module. It is believed that the high relative permittivity occurs when certain grades or types of carbon blacks form a percolated carbon black network in the cured (vulcanized) rubber composition. The rubber compositions according to the first-third embodiments disclosed herein minimize, or at least reduce, this occurrence (*i.e.,* the formation of the percolated carbon black network), and thereby the formation of a rubber composition having a high relative permittivity, through the selection of carbon black filler having particular properties. Specifically, the carbon black filler used in the rubber compositions according to the first-third embodiments has a nitrogen surface area of no more than 30 m²/g and a DBP absorption of no more than 60 cm³/100 g. In certain embodiments, the carbon black has a nitrogen surface area of no more than 15 m²/g and a DBP absorption of no more than 50 cm³/100 g. The nitrogen surface area and the DBP absorption provide respective characterizations of the particle size and structure of the carbon black. The nitrogen surface area is a conventional way of measuring the surface area of carbon black. Specifically, the nitrogen surface area is a measurement of the amount of nitrogen which can be absorbed into a given mass of carbon black. Preferably, the nitrogen surface area is determined according to ASTM test D6556 or D3037. The DBP absorption is a measure of the relative structure of carbon black determined by the amount of DBP a given mass of carbon black can absorb before reaching a specified viscous paste. Preferably, the DBP absorption is determined according to ASTM test D2414. The carbon black(s) used in accordance with the first-third embodiments include any of the commonly available, commercially-produced carbon blacks, so long as they have nitrogen surface area of no more than 30 m²/g and a DBP absorption of no more than 60 cm³/100 g. One or more than one carbon black may be utilized, so long the nitrogen surface area and the DBP absorption are no more than 30 m²/g and 60 cm³/100 g for each of the carbon blacks used.

Examples of suitable carbon blacks having nitrogen surface area of no more than 30 m²/g and a DBP absorption of no more than 60 cm³/100 g include, but are not limited to, thermal blacks or the N9 series carbon blacks (also referred to as the N-900 series), such as those with the ASTM designation N-907, N-908, N-990, and N-991. Various carbon blacks meeting the foregoing are commercially available, including but not limited to Thermax® N990 carbon black from Cancarb Limited (Medicine Hat, Alberta, Canada). Table 1 shows the nitrogen surface area and DBP absorption for exemplary N9 series carbon blacks that can be used in rubber compositions according to certain embodiments of the first-third embodiments.

| **Table 1** | | |
|---|---|---|
| **Carbon Black** | **DBP Absorption (cm³/100 g), D2414** | **Nitrogen Surface Area (m²/g), D3037** |
| N907 | 34 | 9-11 |
| N908 | 34 | 9 |
| N990 | 43 | 8-9 |
| N991 | 35 | 7-8 |

### Non-Reinforcing Filler

In certain embodiments of the first-third embodiments disclosed herein, the rubber compositions further comprises at least one additional non-reinforcing filler, in addition to the carbon black having a nitrogen surface area of no more than 30 m²/g and a DBP absorption of no more than 60 cm³/100 g. In accordance with certain such embodiments, the rubber composition further comprises at least about 25 phr (in total) of at least one non-reinforcing filler, including at least 25 phr, including at least about 35 phr, including at least 35 phr, including at least about 40 phr, including at least 40 phr, including at least about 50 phr, including at least 50 phr, including at least about 60 phr, including at least 60 phr, including at least about 70 phr, including at least 70 phr, including at least about 80 phr, including at least 80 phr, including at least about 90 phr, including at least 90 phr, including at least about 100 phr, and including at least 100 phr (in total) of at least one non-reinforcing filler. In certain of the first-third embodiments, the rubber composition comprises from about 25 phr to about 100 phr (in total) of at least one non-reinforcing filler, including from 25 phr to 100 phr, including from about 25 phr to about 75 phr, including from 25 phr to 75 phr, including from about 25 phr to about 50 phr, including from 25 phr to 50 phr, including from about 25 to about 40 phr, including from 25 phr to 40 phr, including from about 50 phr to about 100 phr, including from 50 phr to 100 phr, including from about 75 phr to about 100 phr, including from 75 phr to 100 phr, including from about 90 phr to about 100 phr, including from 90 phr to 100 phr, including from about 35 phr to about 90 phr, including from 35 phr to 90 phr, including from about 45 phr to about 80 phr, including from 45 phr to 80 phr, including from about 50 phr to about 75 phr and including from 50 phr to 75 phr (in total) of at least one non-reinforcing filler.

As used herein, the term "non-reinforcing filler" refers to non-carbon black particulate material that has a nitrogen surface area of less than about 20 m²/g (including less than 20 m²/g), and in certain embodiments less than about 10 m²/g (including less than 10 m²/g). The nitrogen surface area of the non-reinforcing filler particulate material can be determined according to various standard methods (including ASTM D6556 or D3037). With a nitrogen surface area of less than about 20 m²/g (or less than 20 m²/g), the "non-reinforcing filler" as used herein excludes most silica fillers (which are generally reinforcing, especially fumed silicas, precipiated silicas and precipitated silicates). Examples of suitable such non-reinforcing fillers include, but are not limited to, graphite, clay, titanium dioxide, magnesium dioxide, aluminum oxide (Al₂O₃), starch, talc, aluminum carbonate (Al₂(CO₃)₂, calcium carbonate (CaCO₃), magnesium carbonate (MgCO₃), calcium oxide, mica, calcium oxide, boron nitride, silicon nitride, aluminum nitride, calcium silicate (Ca₂SiO₄, *etc*.), crystalline aluminosilicates, and silicon carbide. In accordance with certain embodiments of the rubber composition according to the first-third embodiments, the non-reinforcing filler is at least one of: graphite, clay, titanium dioxide, magnesium dioxide, aluminum oxide, starch, talc, aluminum carbonate (Al₂(CO₃)₂, calcium carbonate (CaCO₃), magnesium carbonate (MgCO₃), calcium oxide, mica, calcium oxide, boron nitride, silicon nitride, aluminum nitride, calcium silicate (or silicon carbide (Ca₂SiO₄, *etc*.), or crystalline aluminosilicates.

### Silica Filler

The rubber composition according to the first-third embodiments disclosed herein optionally further comprises a silica filler. In particular, the rubber composition according to the first-third embodiments includes silica filler in an amount of 0 (optional) to about 5 phr, including 0 to 5 phr, less than about 5 phr of silica, and less than 5 phr of silica.

Examples of suitable silica fillers optionally used in the rubber compositions according to the first-third embodiments include, but are not limited to, precipitated amorphous silica, wet silica (hydrated silicic acid), dry silica (anhydrous silicic acid), fumed silica, calcium silicate and the like. Other suitable fillers for use in rubber compositions of certain embodiments of the first-third embodiments disclosed herein include, but are not limited to, aluminum silicate, magnesium silicate (Mg₂SiO₄, MgSiO₃ etc.), magnesium calcium silicate (CaMgSiO₄), calcium silicate (Ca₂SiO₄ etc.), aluminum silicate (Al₂SiO₅, Al₄.3SiO₄.5H₂O etc.), aluminum calcium silicate (Al₂O₃.CaO₂SiO₂, etc.), and the like. Among the listed silica fillers, precipitated amorphous wet-process, hydrated silica fillers are preferred. Such silica fillers are produced by a chemical reaction in water, from which they are precipitated as ultrafine, spherical particles, with primary particles strongly associated into aggregates, which in turn combine less strongly into agglomerates. The surface area of silica fillers can be determined according to various standard methods, including the BET method and ASTM D1993. In certain embodiments of the first-third embodiments disclosed herein, the rubber composition comprises a silica filler having a surface area (as measured by the BET method) of about 32 m²/g to about 400 m²/g (including 32 m²/g to 400 m²/g), with the range of about 100 m²/g to about 300 m²/g (including 100 m²/g to 300 m²/g) being preferred, and the range of about 150 m²/g to about 220 m²/g (including 150 m²/g to about 400 m²/g) being most preferred. In certain embodiments of the first-third embodiments disclosed herein, the rubber composition comprises silica filler having a pH of about 5.5 to about 7 or slightly over 7, preferably about 5.5 to about 6.8. Commercially available silicas include HI-SIL 215, HI-SIL 233, HI-SIL 255LD, and HI-SIL 190 (PPG Industries; Pittsburgh, Pennsylvania), ZEOSIL 1165MP and 175GRPlus (Rhodia), VULKASIL (LANXESS), ULTRASIL VN2, VN3 (Degussa), and HUBERSIL 8745 (Huber).

When silica is used in the rubber compositions disclosed herein, in certain embodiments at least one silane coupling agent may be used. In accordance with certain embodiments, the silane coupling agent is present in an amount from 0.01% to 40% by weight of the silica, including from 0.01% to 30%, including from 0.01% to 25% by weight of the silica. Generally speaking, any conventional type of silane coupling agent, can be used, such as those having a silane and a constituent component or moiety that can react with a rubber, particularly a vulcanizable rubber. The silane coupling agent acts as a connecting bridge between silica and the rubber. Suitable silane coupling agents include those containing groups such as mercapto, blocked mercapto, polysulfide, amino, vinyl, epoxy, and combinations thereof.

### Elastomers

As discussed above, the rubber compositions according to the first-third embodiments comprise 100 phr of at least one diene-based elastomer. As used herein, the term "diene-based elastomer" refers to a diene-monomer containing polymer, copolymer, or combination thereof (*i.e.,* more than one polymer, more than one copolymer, one polymer and one copolymer, more than one polymer and one copolymer, more than one copolymer and one polymer, or more than one copolymer and more than one polymer). In accordance with certain embodiments according to the first-third embodiments, the at least one diene-based elastomer includes a diene-monomer containing polymer, copolymer, or combination thereof derived from, for example, the polymerization of one or more of the following conjugated diene monomers: 1,3 butadiene, isoprene, 1,3-pentadiene, 1,3-hexadiene, 2,3-dimethyl-1,3-butadiene, 2-ethyl-1,3-butadiene, 2-methyl-1,3-pentadiene, 3-methyl-1,3-pentadiene, 4-methyl-1,3-pentadiene, 2,4-hexadiene, 1,3-cyclopentadiene, 1,3-cyclohexadiene, 1,3-cycloheptadiene, and 1,3-cyclooctadiene, and derivatives thereof. It should be understood that mixtures of two or more conjugated diene monomers may be utilized in certain embodiments. Non-limiting examples of suitable diene-based elastomers for use in the rubber compositions according to certain embodiments of the first-third embodiments disclosed herein include, but are not limited to, at least one of styrene-butadiene rubber (also referred to as SBR or styrene-butadiene copolymer), polybutadiene, natural rubber, ethylene propylene diene monomer rubber (also known as EPDM rubber), butyl rubber, neoprene, or polyisoprene.

In certain embodiments according to the first-third embodiments disclosed herein, the at least one diene-based elastomer of the rubber composition, particularly styrene-butadiene types of diene-based elastomers, may comprise a functionalized diene-based elastomer. As used herein, the term "functionalized diene-based elastomer" should be understood to include elastomers with a functional group at one or both terminus (*e.g*., from use of a functionalized initiator, a functionalized terminator, or both), a functional group in the main chain of the elastomer, and combinations thereof. For example, a silica-reactive functionalized elastomer may have the functional group at one or both terminus, in the main chain thereof, or both. In certain such embodiments, the rubber composition comprises about 5 to 100 phr of at least one functionalized diene-based elastomer, including 5 to 100 phr, about 5 to about 90 phr, 5 to 90 phr, about 5 to about 70 phr, 5 to 70 phr, about 5 to about 50 phr, 5 to 50 phr, about 5 to about 40 phr, 5 to 40 phr, about 5 to about 30 phr, 5 to 30 phr, about 10 to about 90 phr, 10 to 90 phr, about 10 to about 70 phr, 10 to 70 phr, about 10 to about 50 phr, 10 to 50 phr, about 10 to about 40 phr, 10 to 40 phr, about 10 to about 30 phr, and 10 to 30 phr. In certain embodiments according to the first-third embodiments disclosed herein, the functionalized diene-based elastomer comprises a diene-based elastomer with a silica-reactive functional group. Non-limiting examples of silica-reactive functional groups that are known to be utilized in functionalizing diene-based elastomers and that are suitable for use in the rubber compositions of certain embodiments of the first-third embodiments include nitrogen-containing functional groups, silicon-containing functional groups, oxygen- or sulfur-containing functional groups, and metal-containing functional groups.

Non-limiting examples of nitrogen-containing functional groups that are known to be utilized in functionalizing diene-based elastomers include, but are not limited to, any of a substituted or unsubstituted amino group, an amide residue, an isocyanate group, an imidazolyl group, an indolyl group, a nitrile group, a pyridyl group, and a ketimine group. The foregoing substituted or unsubstituted amino group should be understood to include a primary alkylamine, a secondary alkylamine, or a cyclic amine, and an amino group derived from a substituted or unsubstituted imine. In certain embodiments according to the first-third embodiments disclosed herein, the rubber composition comprises a functionalized diene-based elastomer having at least one functional group selected from the foregoing list of nitrogen-containing functional groups.

Non-limiting examples of silicon-containing functional groups that are known to be utilized in functionalizing diene-based elastomers include, but are not limited to, an organic silyl or siloxy group, and more precisely, the functional group may be selected from an alkoxysilyl group, an alkylhalosilyl group, a siloxy group, an alkylaminosilyl group, and an alkoxyhalosilyl group. Suitable silicon-containing functional groups for use in functionalizing diene-based elastomer also include those disclosed in U.S. Patent No. 6,369,167, the entire disclosure of which is herein incorporated by reference. In certain embodiments according to the first-third embodiments disclosed herein, the rubber composition comprises a functionalized diene-based elastomer having at least one functional group selected from the foregoing list of silicon-containing functional groups.

Non-limiting examples of oxygen- or sulfur-containing functional groups that are known to be utilized in functionalizing diene-based elastomers include, but are not limited to, a hydroxyl group, a carboxyl group, an epoxy group, a glycidoxy group, a diglycidylamino group, a cyclic dithiane-derived functional group, an ester group, an aldehyde group, an alkoxy group, a ketone group, a thiocarboxyl group, a thioepoxy group, a thioglycidoxy group, a thiodiglycidylamino group, a thioester group, a thioaldehyde group, a thioalkoxy group, and a thioketone group. In certain embodiments, the foregoing alkoxy group may be an alcohol-derived alkoxy group derived from a benzophenone. In certain embodiments according to the first-third embodiments disclosed herein, the rubber composition comprises a functionalized diene-based elastomer having at least one functional group selected from the foregoing list of oxygen- or sulfur-containing functional groups.

Generally, diene-based elastomers may be prepared and recovered according to various suitable methods such as batch, semi-continuous, or continuous operations, as are well known to those having skill in the art. The polymerization can also be carried out in a number of different polymerization reactor systems, including but not limited to bulk polymerization, vapor phase polymerization, solution polymerization, suspension polymerization, coordination polymerization, and emulsion polymerization. The polymerization may be carried out using a free radical mechanism, an anionic mechanism, a cationic mechanism, or a coordination mechanism. All of the above polymerization methods are well known to persons skilled in the art.

Optionally, the rubber composition according to the first-third embodiments disclosed herein may further comprise up to about 20 phr (including up to 20 phr) of a silicone rubber elastomer. That is in certain embodiments, in addition to the 100 phr of the at least one diene based elastomer, the rubber composition comprises contains up to about 20 phr of a silicone rubber elastomer, including up to 20 phr, including from 0 to about 20 phr, including 0 to 20 phr, including from about 5 phr to about 20 phr, including 5 phr to 20 phr, including from about 5 phr to about 15 phr, including 5 phr to 15 phr, including from about 5 phr to about 10 phr, including 5 phr to 10 phr, including less than about 10 phr, including less than 10 phr, including less than about 5 phr, and including less than 5 phr.

### Oils

The addition of certain fillers may provide desirable properties to the rubber compositions (*e.g.,* improved elasticity, strength, *etc*.), but such fillers generally increase the Mooney viscosity of the rubber composition, thereby making it more difficult to process the rubber composition. In certain embodiments according to the first-third embodiments disclosed herein, one or more process oils optionally may be included in the rubber composition to improve processability by reducing the Mooney viscosity. Alternatively or in addition, one or more extender oils also optionally may be added to the rubber composition formulations to soften the rubber composition. Non-limiting examples of oils used in the rubber compositions according to certain of the first-third embodiments disclosed herein include paraffinic, naphthenic, aromatic process, and the like. Certain suitable oils, including the aforementioned oils, are low polycyclic aromatic content (low PCA) oils. Low PCA oils include those containing less than 3 wt%, less than 2 wt% or less than 1 wt% of polycyclic aromatic compounds (as measured by IP346). Commercially available low PCA oils include various naphthenic oils, mild extraction solvates (MES) and treated distillate aromatic extracts (TDAE), treated residual aromatic extract (TRAE), and heavy naphthenics. Suitable MES oils are available commercially as CATENEX SNR from SHELL, PROREX 15 and FLEXON 683 from EXXONMOBIL, VIVATEC 200 from BP, PLAXOLENE MS from TOTALFINAELF, TUDALEN 4160/4225 from DAHLEKE, MES-H from REPSOL, MES from Z8, and OLIO MES S201 from AGIP. Suitable TDAE oils are available as TYREX 20 from EXXONMOBIL, VIVATEC 500, VIVATEC 180 and ENERTHENE 1849 from BP, and EXTENSOIL 1996 from REPSOL. Suitable heavy naphthenic oils are available as SHELLFELX 794, ERGON BLACK OIL, ERGON H2000, CROSS C2000, CROSS C2400, and SAN JOAQUIN 2000L. Suitable low PCA oils also include various plant-sourced oils such as can be harvested from vegetables, nuts and seeds. Non-limiting examples include, but are not limited to, soy or soybean oil, sunflower oil, safflower oil, corn oil, linseed oil, cotton seed oil, rapeseed oil, cashew oil, sesame oil, camellia oil, jojoba oil, macadamia nut oil, coconut oil, and palm oil. In accordance with certain embodiments disclosed herein, the rubber composition further comprises 0 (optional) to about 40 phr of one or more oils (process, extender, or both), including 0 to 40 phr, including from about 2 to about 35 phr, including 2 to 35 phr, including from about 5 to about 25, including 5 to 25 phr, including from about 5 to about 20 phr, and including 5 to 20 phr of one or more oils.

### Other Additives

In certain embodiments according to the first-third embodiments disclosed herein, the rubber compositions may include other conventional rubber additives. These include, for example, oils, plasticizers, processing aids, waxes, anti-degradants such as antioxidants and anti-ozonants, tackifying resins, reinforcing resins, fatty acids, peptizers, zinc oxide, and the like. Anti-degradants are ingredients added to protect the rubber from oxidative attack. ASTM D-4676 classifies rubber anti-degradants into six classes: p-phenylenediamines (PPDs), trimethyl-dihydroquinolines (TMQs), phenolics, alkylated diphenylamines (DPAs), aromatic phosphites, and diphenylamine-ketone condensates. Unless otherwise indicated herein, suitable amounts of such components can be determined by one skilled in the art.

### Cure Package

In certain embodiments of the first-third embodiments disclosed herein, the rubber composition includes a cure package. Generally, the cure package includes at least one of: a vulcanizing agent, a vulcanizing accelerator, a vulcanizing activator (*e.g.,* zinc oxide, stearic acid, and the like), a vulcanizing inhibitor, and an anti-scorching agent. In certain embodiments of the first-third embodiments, the cure package includes at least one vulcanizing agent, at least one vulcanizing accelerator, at least one vulcanizing activator and optionally a vulcanizing inhibitor and/or an anti-scorching agent. Vulcanizing accelerators and vulcanizing activators act as catalysts for the vulcanization agent. Vulcanizing inhibitors and anti-scorching agents are known in the art and can be selected by one skilled in the art based on the vulcanizate properties desired.

Examples of suitable types of vulcanizing agents for use in the rubber compositions according to certain of the first-third embodiments, include but are not limited to, sulfur or peroxide-based curing components. Thus, in certain such embodiments, the curative component includes a sulfur-based curative or a peroxide-based curative. Examples of specific suitable sulfur vulcanizing agents include "rubbermaker's" soluble sulfur; sulfur donating curing agents, such as an amine disulfide, polymeric polysulfide or sulfur olefin adducts; and insoluble polymeric sulfur. Preferably, the sulfur vulcanizing agent is insoluble sulfur or a mixture of soluble and insoluble polymeric sulfur. For a general disclosure of suitable vulcanizing agents and other components used in curing, *e.g.,* vulcanizing inhibitor and anti-scorching agents, one can refer to Kirk-Othmer, Encyclopedia of Chemical Technology, 3rd ed., Wiley Interscience, N.Y. 1982, Vol. 20, pp. 365 to 468, particularly Vulcanization Agents and Auxiliary Materials, pp. 390 to 402, which is incorporated herein by reference. Vulcanizing agents can be used alone or in combination. Generally, the vulcanizing agents are used in an amount ranging from 0.1 to 10 phr, including from 1 to 7.5 phr, including from 1 to 5 phr, and preferably from 1 to 3.5 phr.

Vulcanizing accelerators are used to control the time and/or temperature required for vulcanization and to improve properties of the vulcanizate. Examples of suitable vulcanizing accelerators for use in the rubber compositions according to certain of the first-third embodiments disclosed herein include, but are not limited to, thiazole vulcanization accelerators, such as 2-mercaptobenzothiazole, 2,2'-dithiobis(benzothiazole) (MBTS), N-cyclohexyl-2-benzothiazole-sulfenamide (CBS), N-tert-butyl-2-benzothiazole-sulfenamide (TBBS), and the like; guanidine vulcanization accelerators, such as diphenyl guanidine (DPG) and the like; thiuram vulcanizing accelerators; carbamate vulcanizing accelerators; and the like. Generally, the amount of the vulcanization accelerator used ranges from 0.1 to 10 phr, preferably 0.5 to 5 phr.

Vulcanizing activators are additives used to support vulcanization. Generally vulcanizing activators include both an inorganic and organic component. Zinc oxide is the most widely used inorganic vulcanization activator. Various organic vulcanization activators are commonly used including stearic acid, palmitic acid, lauric acid, and zinc salts of each of the foregoing. Generally, the amount of vulcanization activator used ranges from 0.1 to 6 phr, preferably 0.5 to 4 phr.

Vulcanization inhibitors are used to control the vulcanization process and generally retard or inhibit vulcanization until the desired time and/or temperature is reached. Common vulcanization inhibitors include, but are not limited to, PVI (cyclohexylthiophthalmide) from Santogard. Generally, the amount of vulcanization inhibitor is 0.1 to 3 phr, preferably 0.5 to 2 phr.

### Mixing

The rubber composition according to the first-third embodiments may generally be prepared by mixing the ingredients together by methods known in the art, such as, for example, by kneading the ingredients together in a Banbury mixer or on a milled roll. The preparation generally includes at least one non-productive master-batch mixing stage and a final productive mixing stage. In certain embodiments, the non-productive stage includes a re-mill stage. Non-productive master-batch and re-mill stages are known to those of skill in the art and generally understood to be a mixing stage where no vulcanizing agents or vulcanization accelerators are added. The final productive mixing stage is also known to those of skill in the art and generally understood to be a mixing stage where the vulcanizing agents and vulcanization accelerators are added into the rubber composition. As used herein, the term "final batch" refers to the productive mixing stage itself, or to the rubber formulation present in this stage, in which the vulcanizing agents and vulcanization accelerators are added into the rubber composition.

The master-batch mixing stage may be conducted at a temperature of about 80°C to about 200°C (including 80°C to about 200°C. The separate re-mill stage often is performed at temperatures similar to, although often slightly lower than, those employed in the master-batch stage, e.g., ramping from about 90°C (including 90°C) to a drop temperature of about 150°C (including 150°C). For purposes of this application, the term "master-batch" means the composition that is present during the master-batch stage or the composition as it exists during the re-mill stage, or both. The final, productive mixing stage, in which the curatives are charged, *e.g.,* the vulcanizing agents and vulcanization accelerators, often is conducted at lower temperatures, e.g., starting at about 50°C to about 65°C (including 50°C to 65°C) and not going higher than about 100°C to about 130°C (including 100°C to about 130°C).

### Tire and Tire Components

As discussed above, the electronic communication module according to the first-third embodiments is suitable for use in a tire or a tire retread and can be incorporated into the tire or tire retread. As used herein, the term "incorporated" or "incorporated into" is meant to include not only embedding or inserting into the interior portion of the tire or tire retread, but also associating with the tire or tire retread in other ways such as by the use of a patch. In certain embodiments according to the present disclosure, the patch that is used to associate the electronic communication module with the tire or tire retread is comprised of the rubber compositions disclosed herein. As discussed above, the second embodiment of the present disclosure is directed to the tire or tire retread comprising the electronic communication module of the first embodiment. In other words, the second embodiment is directed to a tire or tire retread having incorporated therein an electronic communication module with a radio device having at least a portion of its outer surface surrounded by the rubber compositions disclosed herein (*i.e.,* according to the first embodiment disclosed herein).

In accordance with certain embodiments of the first-third embodiments, the rubber composition surrounding the radio device in the electronic communication module is cured (vulcanized) prior to incorporation of the electronic communication module into the tire or tire component. According to such embodiments, the electronic communication module comprising the cured rubber composition may be inserted, embedded, or otherwise incorporated into the uncured tire or tire component. It should be understood that in the case of a tire retread, the electronic communication module comprising the cured rubber composition may be inserted, embedded, or otherwise incorporated into the new tread prior to curing the new tread, prior to applying the new tread to the reused tire casing, or prior to both. In accordance with these embodiments, the tire, tire retread or tire with the new retread is then cured with the electronic communication module incorporated therein.

Alternatively, when the rubber composition surrounding the radio device in the electronic communication module is cured prior to its incorporation into the tire or tire component, the electronic communication module may be adhered to the cured rubber composition of the tire or tire component using a patch, a suitable adhesive, or a cement capable of withstanding the operating conditions of a tire. As well, as discussed above, in certain embodiments, the patch itself comprises the rubber composition that surround at least a portion of the outer surface of the radio device. In certain embodiments, the electronic communication module can be adhered to the tire or tire component in the manner discussed in U.S. Patent No. 5,971,046, which is incorporated herein by reference.

Furthermore, the rubber composition surrounding the radio device in the electronic communication module may be incorporated into the tire or tire retread prior to curing the rubber composition of the electronic communication module. In such embodiments, the electronic communication module comprising the uncured rubber composition (surrounding at least a portion of the outer surface of the radio device) is incorporated into the desired location of a tire or tire tread. The uncured rubber composition of the electronic module according to the first-third embodiments is then cured simultaneously along with the tire or tire tread.

Generally, when the rubber compositions disclosed herein are utilized in tires or tire retreads, these compositions are incorporated into a tire or tire retread according to ordinary tire manufacturing techniques including standard rubber shaping, molding, and curing techniques. In accordance with certain of the first-third embodiments, the electronic communication module may be incorporated into a tire retread or various components of a tire (*e.g.,* tread, sidewall, belt skim, or carcass). In certain embodiments, tires as disclosed herein can be produced as discussed in U.S. Patent Nos. 5,866,171; 5,876,527; 5,931,211; and 5,971,046, which are incorporated herein by reference.

### Method of Improving Readability

As discussed above, the third embodiment of the present disclosure is directed to a method of improving the readability of a radio device upon incorporation into a tire or tire retread. The method comprises surrounding at least a portion of the outer surface of the radio device by a rubber composition, thereby forming an electronic communication module. The rubber composition according to this embodiment comprises 100 phr of at least one diene-based elastomer and at least about 35 phr of carbon black (including at least 35 phr), wherein the carbon black has a nitrogen surface area of no more than 30 m²/g and a DBP absorption of no more than 60 cm³/100 g. The rubber composition has a dielectric constant at 915 MHz of less than 7. As discussed above in greater detail, improving the readability of the radio device may include any or all of: increasing the readability distance of the radio device without necessarily increasing the power or energy needed to read the device, reducing or minimizing the noise or interference affecting the communication of radio device, and reducing or minimizing tuning needed for the radio device to communicate accurately and completely. Accordingly, in accordance with certain embodiments of the method of the third embodiment disclosed herein, the readability distance between the radio device in the electronic communication module and an external, remote communication device increases by surrounding at least a portion of the outer surface of the radio device by the rubber composition. In certain embodiments of the preceding embodiment, this is done without increasing the power or energy required for the communication of the radio device. Alternatively or in addition, in accordance with certain embodiments of the method of the third embodiment disclosed herein, interference or noise affecting communication between the radio device and an external, remote communication device is reduced by surrounding at least a portion of the outer surface of the radio device by the rubber composition. Further alternatively or in addition, in accordance with certain embodiments of the method of the third embodiment disclosed herein, any tuning needed for the radio device to accurately and completely communicate with an external, remote communication device is reduced or minimized by surrounding at least a portion of the outer surface of the radio device by the rubber composition. In certain embodiments according to the third embodiment, the improvement of the readability being measured is compared to the use of a rubber composition that substitutes an equivalent amount of N5 series, N4 series, or N3 series carbon black for the carbon black of the first and second embodiments, which has a nitrogen surface area of greater than 30 m²/g and a DBP absorption of greater than 60 cm³/100 g. In certain embodiments, the improvement in readability is compared to the use of a rubber composition that substitutes an equivalent amount of N330 carbon black for the carbon black having a nitrogen surface area of no more than 30 m²/g and a DBP absorption of no more than 60 cm³/100 g. In certain embodiments, the readability distance is improved by at least about 25%, including at least 25%, at least about 50 %, at least 50%, at least about 100%, at least 100%, and associated ranges (*e.g.,* about 25 to about 200%, 25 to 200%, etc.). The foregoing percentages of improvement in readability are based upon an increase in readability distance; for example, an improvement of 100% in readability distance means that the readability distance is doubled.

In accordance with certain embodiments according to the third embodiment, the readability of the radio device improves when a relatively larger percentage of the outer surface of the radio device is surrounded by the rubber composition of the present disclosure. Accordingly, the readability of the radio device improves as the percentage of the outer surface of the radio device that is surrounded by the rubber compositions of the present disclosure increases, *e.g.,* as the percentage approaches and equals 100%.

### Examples

The following examples illustrate specific and exemplary embodiments and/or features of the embodiments of the present disclosure. More specifically, the diene-based elastomers, carbon black, and other ingredients (*e.g.,* curative package ingredients) utilized in the following examples should not be interpreted as limiting since other such ingredients consistent with the disclosure in the Detailed Description can be utilized in substitution. In other words, the particular carbon black and their amounts in the following examples should be understood to apply to the more general content of the Detailed Description. As well, the use of 100 phr of natural rubber and 10 phr of naphthenic oil in Examples 2 and 4 should not in any way be interpreted as requiring the presence of natural rubber and/or oil in the rubber compositions disclosed herein.

**Examples 1-4:** The rubber compositions of Examples 1-4 were prepared according to the formulations shown in Table 2 where the type and amount of carbon black filler was varied. The rubber compositions of Examples 1-4 were prepared according to the mixing procedure shown in Table 3. The rubber compositions of Examples 1-4 were then cured at 170 °C for 15 minutes. After calendaring to a 2 mm thickness, followed by curing, 30 mm x 30 mm x 2 mm samples of each rubber composition were taken. The dielectric constant at 915 MHz was measured for each cured rubber sample using a RF Impedance/Material Analyzer from Agilent Technologies (model E4991A with dielectric material test fixture 16453A). This analyzer utilizes the parallel plate method for measuring permittivity in accordance with ASTM method D150. (Operating manuals, data sheets and other related information for measurement of permittivity using the E4991A RF Impedance/Material Analyzer are available with the instrument and also on-line at www.keysight.com, with Keysight Technologies now selling Agilent brand electronic measurement instrument). The dielectric constant values are reported in Table 2 below. It should be understood that the dielectric constants (*i.e.,* relative permittivity) of rubber compositions according to the present disclosure can be measured using different instruments, although generally measurements taken using parallel plate methods in accordance with ASTM D150 are preferred.

| **Table 2** | | | | |
|---|---|---|---|---|
| **Example #** | **1** | **2** | **3** | **4** |
| **Master-Batch** | | | | |
| Natural Rubber | 100 | 100 | 100 | 100 |
| N990 Carbon black filler (phr) w/ Nitrogen surface area = 8 m²/g (D3037) DBP Absorption = 43 cm³/100 g (D2024) | 0 | 60 | 0 | 35 |
| N330 Carbon black filler (phr) Nitrogen surface area = 83 m²/g (D3037) DBP Absorption = 102 cm³/100 g (D2024) | 60 | 0 | 35 | 0 |
| Naphthenic oil (phr) | 10 | 10 | 10 | 10 |
| Stearic acid (phr) | 1.5 | 1.5 | 1.5 | 1.5 |

| **Final Batch** | | | | |
|---|---|---|---|---|
| Vulcanizing agent | 2 | 2 | 2 | 2 |
| Vulcanizing activators | 2 | 2 | 2 | 2 |
| Vulcanizing accelerator | 0.75 | 0.75 | 0.75 | 0.75 |
| Total phr | 176.25 | 176.25 | 176.25 | 176.25 |
| | | | | |
| Dielectric Constant at 915 MHz | 8.8 | 5.3 | 5.7 | 4.2 |

| **Table 3: Mixing Parameters** | | |
|---|---|---|
| **Stage** | **Time** | **Condition** |
| **Master-Batch Stage** (initial temperature 105 °C, rotor 60 rpm) | 0 seconds | Charge elastomer |
| | 30 seconds | Charge filler and other master-batch ingredients |
| | 120 seconds | Clean ram |
| | 165 seconds | Drop based on time or max temperature of 160 °C |
| **Final Batch Stage** (initial temperature 50 °C, rotor rpm at 40) | 0 seconds | Charge Master Batch |
| | 0 seconds | Charge final batch ingredients |
| | 60 seconds | Clean ram |
| | 120 seconds | Drop based on time or max temperature of 100 °C |

As shown in Table 2, the rubber compositions of Examples 2 and 4 are prepared according to the first embodiment disclosed herein with a carbon black (N990) that has a nitrogen surface area of no more than 30 m²/g and a DBP absorption of no more than 60 cm³/100 g. Examples 1 and 3 can be considered controls. The rubber composition formulations of Examples 1 and 3 mirror the rubber composition formulations of Examples 2 and 4, respectively, except Examples 1 and 3 use an N330 carbon black filler, which has a nitrogen surface area of greater than 30 m²/g and a DBP absorption of greater than 60 cm³/100 g. Thus, Example 1 is considered a control for Example 2, and Example 3 is considered a control for Example 4. Examples 2 has a dielectric constant of 5.3, which is lower than that of its control (Example 1), which has a dielectric constant of 8.8. Example 4 has a dielectric constant of 4.2, which is lower than that of its control (Example 3), which has a dielectric constant of 5.7.

**Examples 5 and 6:** For Examples 5 and 6, one of two rubber compositions were used to coat RFID tag radio devices and the coated tags were then incorporated into tires. As detailed in Table 6 below, for each rubber composition tags coated with that composition were incorporated into new (unused) tires and various lengths of antenna within the radio device were utilized as also detailed in Table 6. The rubber composition used for Example 6 had the formula as set forth in Table 5 below. The rubber composition used for Example 5 constituted a commercial composition available from Patch Rubber Company (Roanoke Rapids, North Carolina) which contained no silica and at least about 35 phr of a reinforcing carbon black (*e.g.,* N300, N400, N500 series) in a natural rubber-containing composition. Using the method described above for Example 1-4, the rubber composition used in Example 6 had a measured dielectric constant of 6.5.

| **Table 5 - Ingredients of Example 6** | |
|---|---|
| Ingredient | Amount (phr) |
| | |

| **Master-Batch** | |
|---|---|
| Natural Rubber | 70 |
| Polybutadiene Rubber | 30 |
| N990 Carbon black filler (phr) w/ | 35 |
| Nitrogen surface area = 8 m²/g (D3037) | |
| DBP Absorption = 43 cm³/100 g (D2024) | |
| Silica filler | 60 |
| Antidegradants | 7 |
| Processing oils (naphthenic & aromatic) | 10 |
| Vulcanizing activators | 7 |
| Silica coupling agent | 6 |

| **Final Batch** | |
|---|---|
| Vulcanizing agent | 2.5 |
| Antidegradant | 3 |
| Vulcanizing accelerator | 1 |
| Total phr | 231.5 |

In order to coat the RFID tags, the tags were coated by entirely covering with their respective rubber composition using a thickness of 0.5 mm on both sides of the tag During the coating process, temperatures and times were maintained below that of the scorch of the respective compound. The coated RFID tags were then manually incorporated into new (unused) truck/bus radial tires (295/75R22.5) which contained a steel body ply and two 2 nylon reinforcement plies in the bead region within the lower sidewall portion of the tire (near the top end of the bead filler) of the tire, between the chafer and the sidewall (in the radial direction, the tag was outside the rim flange and in the lateral direction it was on the outside of the bead filler). The tags were embedded (one per tire) so that the long axis of the antenna was oriented circumferentially (and, therefore, perpendicular to the steel body plies). Tags were applied to green tires during the process of assembling the tire on a building drum. After assembly, the tires were cured. Thereafter, the maximum read distance for each coated tag and tire combination in new tires was measured according to the following procedure. An Impinj Speedway Revolution R420 Reader was used to make the measurements; this reader uses an MTI Wireless Edge linearly polarized antenna with a minimum gain of 8 dBi. Measurements were made in the 902-982 MHz frequency range and the antenna of the reader was rotated so that the polarization axis matched the orientation of the tag being measured. The measurements were made in an indoor area deemed large enough to minimize multipath and reflections, herein an area greater than 10 meters x 10 meters with a ceiling height of 5 meters. The tires were held in vertical orientation using a rubber test fixture with a portion of the tread in contact with the ground (as if mounted on a vehicle). The tire was rotated about its spin axis so that the RFID tag was as far from the ground as possible. The reader was oriented broadside to the tire with the tag in the sidewall closest to the reader and the position of the reader was adjusted until it was at the same elevation as the tag. The output of the reader was set to 27 dBm (so as to maintain the combined output power of the reader and the antenna (8 dBm) to 35 dBm which is less than the FCC limit on power output in the United States for UHF RFID). The reader was then moved away from the tire in 2.54 cm (1 inch) increments until the reader could no longer registered a response from the tag. Read range is the farthest distance between the tag and the reader where a response from the tag was received by the reader.

After measurement of the read distances, the tires were subjected to simulated use by mounting onto rims and installing on a tire test machine (fitted with a drum against which the tread of the tire contacted) wherein they were operated at 60 km/hour for a duration of 5000 km, causing them to become aged or used tires. The maximum read distance for each coated tag and tire combination in used/aged tires was then measured according to the above procedure.

| **Table 6** | | | | | |
|---|---|---|---|---|---|
| | | **New Tire** | | **Aged/Used Tire** | |
| **Coating Composition** | **Antenna length (mm)** | **Read Range (inches, cm)** | **Max Read Range (inches, cm)** | **Read Range (inches, cm)** | **Max Read Range (inches, cm)** |
| | 52 | 26, 66 | | 41, 104 | |
| Example 5 | 46 | 35, 89 | | 66, 168 | |
| | 44 | 36, 91 | | 69, 175 | |
| | 42 | 41, 104 | | 70, 178 | |
| | 40 | 37, 94 | 41, 104 | 68, 173 | 70, 178 |
| | 38 | 39, 99 | | 48, 122 | |
| | 36 | 37, 94 | | 51, 130 | |
| | 34 | 26, 66 | | 25, 64 | |
| Example 6 | 52 | 31, 79 | | 65, 165 | |
| | 48 | 41, 104 | | 76, 193 | |
| | 46 | 45, 114 | | 83, 211 | |
| | 44 | 47, 119 | 47, 119 | 84, 213 | 84, 211 |
| | 42 | 40, 102 | | 72, 183 | |
| | 40 | 35, 89 | | 66, 168 | |
| | 38 | 29, 74 | | 47, 119 | |
| | 36 | 26, 94 | | 32, 81 | |

As can be seen from the data of Table 6, the use of the rubber composition of Example 6 which included 35 phr of carbon black having a nitrogen surface area of no more than 30 m²/g (*i.e.,* 8 m²/g and a DBP Absorption of no more than 60 cm³/100 g (*i.e.,* 43 cm³/100 g) to coat a radio device improved the readability of the device upon its incorporation into a tire. More specifically, the maximum read distance achieved using the composition in Example 6 was 47 inches (119 cm) in a new tire which represented an improvement in readability distance of 15% as compared to the maximum read distance achieved using the composition of Example 5. The maximum read distance achieved in Example 6 in a used/aged tire was 84 inches (213 cm) which represented an improvement in readability distance of 20% as compared to the maximum read distance achieved using the composition of Example 5. The improvement in readability distance using the composition of Example 6 can also be calculated based upon a comparison with a coated radio device using the composition of Example 5 and having the same antenna length. For example, in a new tire using a radio device with an antenna 52 cm in length, the use of the rubber composition of Example 6 improved the readability distance by 19% as compared to the use of the rubber composition of Example 5. In a used/aged tire using a radio device with an antenna 44 cm in length, the use of the rubber composition of Example 6 improved the readability distance by 20% as compared to the use of the rubber composition of Example 5.

## Claims

1. An electronic communication module for a tire comprising:
a radio device having at least a portion of its outer surface surrounded by a rubber composition, the rubber composition comprising
100 parts per one hundred parts rubber, phr, of at least one diene-based elastomer, and
at least about 35 phr of carbon black, wherein the carbon black has a nitrogen surface area as measured by ASTM test D6556 of no more than 30 m²/g and a dibutyl phthalate, DBP, absorption as measured by ASTM test D2414 of no more than 60 cm³/100 g, the rubber composition, when cured, having a dielectric constant at 915 MHz of less than 7.

2. The electronic communication module according to claim 1, wherein the rubber composition comprises less than 5 phr silica filler.

3. The electronic communication module according to claim 1 or claim 2, wherein the carbon black is a N9 series carbon black.

4. The electronic communication module according to any one of claims 1-3, wherein the at least one diene-based elastomer comprises at least one of styrene-butadiene rubber, polybutadiene, natural rubber, ethylene propylene diene monomer rubber, butyl rubber, neoprene, or polyisoprene.

5. The electronic communication module according to any one of claims 1-4, wherein the electronic communication module is incorporated in a tire or tire retread.

6. The electronic communication module according to any one of claims 1-5, wherein the rubber composition comprises no more than 100 phr of the carbon black.

7. The electronic communication module according to any one of claims 1-6, wherein the rubber composition has a dielectric constant at 915 MHz of 2.5 to less than 7.

8. The electronic communication module according to any one of claims 1-7, wherein the radio device has a majority of its outer surface surrounded by the rubber composition.

9. The electronic communication module according to any one of claims 1-8, wherein the radio device has at least 95% of its outer surface surrounded by the rubber composition.

10. The electronic communication module according to any one of claims 1-9, wherein the rubber composition further comprises at least 25 phr of at least one non-reinforcing filler.

11. A tire or tire retread comprising the electronic communication module of any one of claims 1-10.

12. A method of improving the readability of a radio device upon incorporation into a tire or tire retread, the method comprising utilizing an electronic communication module according to any one of claims 1-10 in a tire or tire retread.

13. The method according to any claim 12, wherein improving the readability comprises increasing the readability distance of the radio device.

14. The method of claim 13, wherein the readability distance is increased without increasing power or energy required for the communication of the radio device.

## Patentansprüche

1. Elektronisches Kommunikationsmodul für einen Reifen, umfassend:
eine Funkvorrichtung mit mindestens einem Abschnitt ihrer Außenoberfläche, der von einer Kautschukzusammensetzung umgeben ist, wobei die Kautschukzusammensetzung Folgendes umfasst 100 Teile pro einhundert Teile Kautschuk, phr, von mindestens einem Elastomer auf Dienbasis, und
mindestens etwa 35 phr Ruß, wobei der Ruß einen Stickstoffoberflächenbereich, gemessen durch den ASTM-Test D6556, von nicht mehr als 30 m²/g und eine Dibutylphthalat-Absorption (DBP-Absorption), gemessen durch den ASTM-Test D2414, von nicht mehr als 60 cm³/100 g aufweist, wobei die Kautschukzusammensetzung nach dem Aushärten eine Dielektrizitätskonstante bei 915 MHz von weniger als 7 aufweist.

2. Elektronisches Kommunikationsmodul nach Anspruch 1, wobei die Kautschukzusammensetzung weniger als 5 phr Silica-Füllstoff umfasst.

3. Elektronisches Kommunikationsmodul nach Anspruch 1 oder Anspruch 2, wobei der Ruß ein Ruß der N9-Serie ist.

4. Elektronisches Kommunikationsmodul nach einem der Ansprüche 1 bis 3, wobei das mindestens eine Elastomer auf Dienbasis mindestens eines von Styrol-Butadien-Kautschuk, Polybutadien, Naturkautschuk, Ethylen-Propylen-Dien-Monomerkautschuk, Butylkautschuk, Neopren oder Polyisopren umfasst.

5. Elektronisches Kommunikationsmodul nach einem der Ansprüche 1 bis 4, wobei das elektronische Kommunikationsmodul in einen Reifen oder runderneuerten Reifen eingebaut ist.

6. Elektronisches Kommunikationsmodul nach einem der Ansprüche 1 bis 5, wobei die Kautschukzusammensetzung nicht mehr als 100 phr des Rußes umfasst.

7. Elektronisches Kommunikationsmodul nach einem der Ansprüche 1 bis 6, wobei die Kautschukzusammensetzung eine Dielektrizitätskonstante bei 915 MHz von 2,5 bis weniger als 7 aufweist.

8. Elektronisches Kommunikationsmodul nach einem der Ansprüche 1 bis 7, wobei die Funkvorrichtung einen Großteil ihrer Außenoberfläche aufweist, die von der Kautschukzusammensetzung umgeben ist.

9. Elektronisches Kommunikationsmodul nach einem der Ansprüche 1 bis 8, wobei die Funkvorrichtung mindestens 95 % ihrer Außenoberfläche aufweist, die von der Kautschukzusammensetzung umgeben ist.

10. Elektronisches Kommunikationsmodul nach einem der Ansprüche 1 bis 9, wobei die Kautschukzusammensetzung ferner mindestens 25 phr von mindestens einem nicht-verstärkenden Füllstoff umfasst.

11. Reifen oder runderneuerter Reifen, umfassend das elektronische Kommunikationsmodul nach einem der Ansprüche 1 bis 10.

12. Verfahren zur Verbesserung der Lesbarkeit einer Funkvorrichtung nach dem Einbau in einen Reifen oder runderneuerten Reifen, wobei das Verfahren die Verwendung eines elektronischen Kommunikationsmoduls nach einem der Ansprüche 1 -10 in einem Reifen oder runderneuerten Reifen umfasst.

13. Verfahren nach Anspruch 12, wobei die Verbesserung der Lesbarkeit die Erhöhung der Lesbarkeitsdistanz der Funkvorrichtung umfasst.

14. Verfahren nach Anspruch 13, wobei die Lesbarkeitsdistanz ohne Erhöhung der für die Kommunikation der Funkvorrichtung erforderlichen Leistung oder Energie erhöht wird.

## Revendications

1. Module de communication électronique pour un pneumatique comprenant :
un dispositif radio dont au moins une partie de la surface extérieure est entourée d'une composition de caoutchouc, la composition de caoutchouc comprenant
100 parties pour cent de caoutchouc, phr, d'au moins un élastomère à base de diène, et
au moins 35 phr environ de noir de carbone, le noir de carbone ayant une surface spécifique d'absorption d'azote, mesurée selon l'essai ASTM D6556, inférieure ou égale à 30 m²/g et une absorption de phtalate de dibutyle, DBP, mesurée selon l'essai ASTM D2414, n'excédant pas 60 cm³/100 g, la composition de caoutchouc, une fois durcie, ayant une constante diélectrique à 915 MHz inférieure à 7.

2. Module de communication électronique selon la revendication 1, dans lequel la composition de caoutchouc comprend moins de 5 phr de charge de silice.

3. Module de communication électronique selon la revendication 1 ou la revendication 2, dans lequel le noir de carbone est un noir de carbone de la série N9.

4. Module de communication électronique selon l'une quelconque des revendications 1 à 3, dans lequel le au moins un élastomère à base de diène comprend au moins un des éléments suivants : caoutchouc styrène-butadiène, polybutadiène, caoutchouc naturel, caoutchouc monomère d'éthylène propylène diène, caoutchouc butyle, néoprène ou polyisoprène.

5. Module de communication électronique selon l'une quelconque des revendications 1 à 4, le module de communication électronique étant incorporé dans un pneumatique ou un pneumatique rechapé.

6. Module de communication électronique selon l'une quelconque des revendications 1 à 5, dans lequel la composition de caoutchouc comprend au plus 100 phr de noir de carbone.

7. Module de communication électronique selon l'une quelconque des revendications 1 à 6, dans lequel la composition de caoutchouc a une constante diélectrique à 915 MHz égale ou supérieure à 2,5 et inférieure à 7.

8. Module de communication électronique selon l'une quelconque des revendications 1 à 7, dans lequel la majeure partie de la surface extérieure du dispositif radio est entourée par la composition de caoutchouc.

9. Module de communication électronique selon l'une quelconque des revendications 1 à 8, dans lequel 95 % au moins de la surface extérieure du dispositif radio est entourée par la composition de caoutchouc.

10. Module de communication électronique selon l'une quelconque des revendications 1 à 9, dans lequel la composition de caoutchouc comprend en outre au moins 25 phr d'au moins une charge inerte.

11. Pneumatique ou pneumatique rechapé comprenant le module de communication électronique selon l'une quelconque des revendications 1 à 10.

12. Procédé d'amélioration de la lisibilité d'un dispositif radio lors de son incorporation dans un pneumatique ou un pneumatique rechapé, le procédé comprenant l'utilisation d'un module de communication électronique selon l'une quelconque des revendications 1 à 10 dans un pneumatique ou un pneumatique rechapé.

13. Procédé selon la revendication 12, dans lequel l'amélioration de la lisibilité comprend l'augmentation de la distance de lisibilité du dispositif radio.

14. Procédé selon la revendication 13, dans lequel la distance de lisibilité est augmentée sans augmentation de la puissance ou de l'énergie requise pour la communication du dispositif radio.
